(19)

Europäisches
Patentamt
European
Patent Office
Office européen
des brevets

(11) **EP 3 923 214 B1**

(12) **EUROPEAN PATENT SPECIFICATION**

(45) Date of publication and mention
of the grant of the patent:
**20.08.2025  Bulletin 2025/34**

(21) Application number: **20178841.1**

(22) Date of filing: **08.06.2020**

(51) International Patent Classification (IPC):
**G06Q 10/0635** (2023.01)    **G06Q 10/04** (2023.01)
**G06Q 50/06** (2024.01)

(52) Cooperative Patent Classification (CPC):
**G06Q 10/04; G06Q 10/0635; G06Q 50/06**

(54) **METHOD AND COMPUTING SYSTEM FOR PERFORMING A PROGNOSTIC HEALTH ANALYSIS FOR AN ASSET**

VERFAHREN UND RECHENSYSTEM ZUR DURCHFÜHRUNG EINER PROGNOSTISCHEN GESUNDHEITSANALYSE FÜR EINEN ASSET

PROCÉDÉ ET SYSTÈME INFORMATIQUE PERMETTANT RÉALISER UNE ANALYSE PRONOSTIQUE DE L'ÉTAT D'UN ACTIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.12.2021  Bulletin 2021/50**

(73) Proprietor: **Hitachi Energy Ltd**
**8050 Zürich (CH)**

(72) Inventors:
 • **STANO, Pawel**
  **31-619 Kraków (PL)**
 • **KIRSCHNICK, Frank**
  **8134 Adliswil (CH)**

(74) Representative: **Vossius & Partner**
**Patentanwälte Rechtsanwälte mbB**
**Siebertstrasse 3**
**81675 München (DE)**

(56) References cited:
**US-B2- 7 788 205**

 • SANG-RI YI ET AL: "Particle Filter Based Monitoring and Prediction of Spatiotemporal Corrosion Using Successive Measurements of Structural Responses", SENSORS, vol. 18, no. 11, 13 November 2018 (2018-11-13), pages 3909, XP055751542, ISSN: 1424-8220, DOI: 10.3390/s18113909
 • SI XIAOSHENG ET AL: "A General Stochastic Degradation Modeling Approach for Prognostics of Degrading Systems With Surviving and Uncertain Measurements", IEEE TRANSACTIONS ON RELIABILITY, IEEE SERVICE CENTER, PISCATAWAY, NJ, US, vol. 68, no. 3, 1 September 2019 (2019-09-01), pages 1080 - 1100, XP011743164, ISSN: 0018-9529, [retrieved on 20190829], DOI: 10.1109/TR.2019.2908492
 • J.Z. SIKORSKA ET AL: "Prognostic modelling options for remaining useful life estimation by industry", MECHANICAL SYSTEMS AND SIGNAL PROCESSING, vol. 25, no. 5, 1 July 2011 (2011-07-01), AMSTERDAM, NL, pages 1803 - 1836, XP055581128, ISSN: 0888-3270, DOI: 10.1016/j.ymssp.2010.11.018

## Description

FIELD OF THE INVENTION

The invention relates to techniques for assessing a health of an asset. The invention relates in particular to methods and devices for the prognostic assessment of asset health.

BACKGROUND OF THE INVENTION

Electric power systems, such as power generation, transmission and/or distribution system, and industrial systems include assets. Transformers, power generators, and distributed energy resource (DER) units are examples for such assets. The assets are subject to degradation during operation. For planning purposes, scheduling maintenance or replacement work, it is desirable to estimate the remaining useful life (RUL) of assets.

Simulation techniques can be used to simulate the time evolution of an asset. The parameters of such simulation techniques can be based on historical sensor data captured for a fleet of assets. The simulations provide a good picture for the overall statistical evolution of assets. When a large number of identical or similar assets is operated, new information on the degradation process of the assets may be a valuable source of information. It would be desirable to use information that becomes available during operation of a set of assets in the assessment of the health of the assets.

US 7 788 205 B2 discloses techniques that employ stochastic models that predict the probabilities of state transitions for components in a complex system. The models are trained using output observations from the system at runtime. The overall state and health of the system can be determined at runtime by analyzing the distribution of current component states among the possible states.

Sang-ri Yi et al., "Particle Filter Based Monitoring and Prediction of Spatiotemporal Corrosion Using Successive Measurements of Structural Responses," SENSORS, vol. 18, no. 11, 13 November 2018 (2018-11-13), page 3909, discloses techniques for prediction of deterioration of a reinforcement bar.

X. Si et al., "A General Stochastic Degradation Modeling Approach for Prognostics of Degrading Systems With Surviving and Uncertain Measurements", IEEE TRANSACTIONS ON RELIABILITY, IEEE SERVICE CENTER, PISCATAWAY, NJ, US, vol. 68, no. 3, 1 September 2019, pages 1080-1100, discloses a technique for estimating a remaining useful life (RUL). A maximum likelihood estimation framework is provided to determine model parameters based on an expectation maximization algorithm together with particle filtering and smoothing methods.

J.Z. Sikorska et al., "Prognostic modelling options for remaining useful life estimation by industry", MECHANICAL SYSTEMS AND SIGNAL PROCESSING, vol. 25, no. 5, 1 July 2011, pages 1803-1836 discusses strengths and weaknesses of the main prognostics model classes.

SUMMARY

There is a need for enhanced techniques of predicting the evolution of asset degradation. There is in particular a need for techniques that allow the prognostic predictions to be made for a degradation of a health of an asset, while allowing the prognostic predictions to be adjusted when new information becomes available from a set of assets. Alternatively or additionally, there is a need for techniques that can combine additional information on the degradation process acquired for several assets of a set of assets, while allowing the health assessment to be performed using a decentralized system.

The invention is defined by the claims. According to embodiments of the invention, methods and computing systems as recited in the independent claims are provided. The dependent claims define preferred embodiments.

According to embodiments of the invention, a set of plural agents is used for performing prognostic asset health analysis. Each of the plural agents is associated with one asset of a set of assets and is operative to perform a prognostic health analysis for that asset with which the agent is associated.

Each agent may perform a stochastic simulation, in particular a Markov Chain Monte Carlo (MCMC) method, to obtain a prognosis for an evolution of the asset with which the respective agent is associated. The stochastic simulation may be performed using a discrete state space and transition probabilities.

As new information becomes available, each agent may be operative to update the transition probability used for its respective simulation. This may be done in various ways. For illustration, an agent may receive sensor data indicative of the degradation of the asset for which the agent determines a prognosis for a future evolution of an asset health state. Based on the sensor data, the agent may determine updated transition probabilities for future use in the stochastic simulation.

Alternatively or additionally, an agent may receive information on updated transition probabilities and/or an updated Bayesian probability table as determined by other agents in the set, based on an observed degradation of one or several other assets. Based on the received information on updated transition probabilities and/or an updated Bayesian probability table as determined by other agents in the set, the agent may determine updated transition probabilities for future use in the stochastic simulation.

Alternatively or additionally, an agent may receive information on updated transition probabilities and/or an updated Bayesian probability table as determined by a central module, based on an observed degradation of one or several other assets. Based on the received information on updated transition probabilities and/or an updated Bayesian probability table as determined by the central module, the agent may determine updated transition probabilities for future use in the stochastic simulation.

According to an embodiment, a method of performing a prognostic health analysis for an asset is provided. The asset is included in a set of plural assets that are associated with a set of agents. Each of the agents performs a prognostic health analysis for an associated asset of the set of assets. The method comprises determining, by an agent of the set of agents, a prognosis for a future evolution of an asset health state of an asset of the set of assets by performing a stochastic simulation, the stochastic simulation being performed using transition probabilities for transitions between states of a discrete state model. The method comprises receiving, by the agent, observation information that is a function of an observed degradation of at least one asset of the set of assets. The method comprises updating, by the agent, the prognosis, including updating the transition probabilities based on the received observation information. The method comprises generating output based on a result of the stochastic simulation.

The agent may be operative to update the transition probabilities at a time that may be independent of a time at which other agents update transition probabilities used by the other agents to perform stochastic simulations.

Updating the transition probabilities may be triggered by receipt of the observation information.

Updating the transition probabilities may be an event-driven process.

The observation information may be received from another agent and/or from a central module via a communication channel.

The communication channel may be established only intermittently in communication time intervals.

The observation information may be received in one of the communication time intervals in which the communication channel is established.

The communication time intervals may be predetermined time intervals.

The method may further comprise determining, by a second agent of the set of agents, a second prognosis for a future evolution of an asset health state of a second asset of the set of assets by performing a second stochastic simulation, the stochastic simulation being performed using second transition probabilities for transitions between states of the discrete state model.

The agent and the second agent may use the same discrete state model.

The method may comprise updating, by the second agent, the second prognosis, including updating the second transition probabilities .

The agent may share information on the updated transition probabilities with other agents of the set of agents in an asynchronous manner.

The observation information may be a function of sensor measurements obtained for the asset with which the agent is associated.

The agent and the second agent may use transition probabilities that may initially be the same, but which are updated at different times and/or in different ways. Thus, as time passes during ongoing operation of the asset and the second asset, the transition probabilities used by the agent and the second transition probabilities used by the second agent for performing stochastic simulations may deviate from each other.

The method may further comprise outputting, by the agent, the observation information or data derived therefrom to at least one other agent of the set of agents and/or to a central module.

Outputting the observation information or data derived therefrom to at least one other agent of the set of agents and/or to a central module may be performed in response to a trigger event, such as receipt of the observation information.

A communication channel between the agent and the at least one other agent and/or the central module may be selectively established in an intermittent manner.

Outputting the observation information or data derived therefrom to at least one other agent of the set of agents and/or to a central module may be performed selectively only when the communication channel is available.

The data derived from the observation information may be the updated transition probabilities and/or an updated Bayesian probability table.

The observation information may be a function of sensor measurements obtained for at least one other asset different from the asset with which the agent is associated.

The observation information may comprise modified transition probabilities and/or modified Bayesian conditional probabilities.

The modified transition probabilities and/or modified Bayesian conditional probabilities may be received from a central module that receives and combines information on updated transition probabilities determined by two or more agents of the set of agents.

The discrete state space may have n states, with n being an integer greater than two.

Transitions between the states may be governed by a transition matrix.

The transition matrix may be sparsely encoded.

The transition matrix used in the stochastic simulation may have only n-1 non-zero off-diagonal matrix elements.

The observation information may consist of n-1 transition probabilities.

The discrete state space may comprise at least one state in which operation of the asset may be not adversely affected by a failure.

The discrete state space may comprise at least one state in which operation of the asset may be adversely affected by a failure, but the asset continues to operate;

The discrete state space may comprise a state in which the asset may be inoperative due to a failure.

The stochastic simulation may be a Markov Chain Montel Carlo, MCMC, simulation.

The Markov Chain may have order 1, i.e., transitions may be dependent on the state in which the Markov Chain model is currently, while being independent of previous transitions to that state.

The Markov Chain model may be such that states have qualitative interpretation that is monotonically ordered, i.e., it is always possible to compare two states in terms of severity of degradation.

Each state of the discrete state space may have a non-zero transition probability to at most one other state of the discrete state space, which describes more severe degradation, and non-zero transition probability to itself.

The Markov Chain model may be such that states of the discrete state space that do not correspond to failure of the asset have a non-zero transition probability to just one other state of the discrete state space.

The Markov Chain model may be such that a state of the discrete state space that corresponds to failure of the asset does not have any non-zero transition probability to a state other than itself.

Each of the set of agents may perform a stochastic simulation to determine a prognosis for a future evolution of an asset health state of the asset associated with the respective agent.

The agents of the set of agents may be operative to independently update the transition probabilities used in the stochastic simulations.

The method may further comprise receiving, by a central module, information on the transition probabilities updated by the agent.

The central module may determine modified transition probabilities based on the received information.

The central module may output the modified transition probabilities to the set of agents.

Determining the modified transition probabilities may comprise weighting received information with a weighting factor.

The weighting factor may be dependent on an importance associated with the updated transition probabilities determined by the agent.

All assets of the set of assets may be of the same or similar asset type.

All assets of the set of assets may be industrial assets or electric power system assets.

All assets of the set of assets a distributed energy resource (DER) unit, a power generator, a power transformer, or a distribution transformer.

The generated output may be a remaining useful life (RUL) curve, a probability of failure (PoF) curve, or other information representing the degradation of the asset.

The generated output may be a control signal used to control the asset with which the agent is associated.

The generated output may be a control signal used for scheduling a down-time of the asset based on the stochastic simulation, for scheduling maintenance, inspection or replacement work based on the stochastic simulation, and/or for changing maintenance or inspection intervals based on the stochastic simulation.

The generated output may be dependent on the stochastic simulation with the transition probabilities updated by the agent.

The method may comprise outputting the output via a human machine interface (HMI) or a control command interface.

A method of operating and/or maintaining an asset comprises performing a prognostic asset health analysis for each asset of the set of assets using the method according to an embodiment and automatically taking a control or output action based on the prognostic asset health analysis.

The control or output action may comprise performing at least one of the following: generating an alarm or warning based on the computed prognostic asset health state evolution; generating a control signal to control operation of the asset based on the computed prognostic asset health state evolution; scheduling a down-time of the asset based on the computed evolution of the asset health state; scheduling maintenance or inspection work based on the computed evolution of the asset health state; scheduling replacement work based on the computed evolution of the asset health state; changing maintenance or inspection intervals based on the computed evolution of the asset health state.

The control or output action may comprise outputting information on a failure probability as a function of operating time, on a scheduled or rescheduled maintenance work interval, or on a scheduled replacement work interval via an interface.

According to an embodiment, a computing system operative to perform a prognostic health analysis for an asset included in a set of assets is provided. The computing system comprises at least one integrated circuit operative to execute an agent to determine a prognosis for a future evolution of an asset health state of the asset by performing a stochastic simulation, the stochastic simulation being performed using transition probabilities for transitions between states of a discrete state model, receive observation information that may be based on an observed degradation of at least one asset of the set of assets, update the prognosis, including updating the transition probabilities based on the received observation information, and generate output based on a result of the stochastic simulation.

The computing system may be operative such that the agent may be operative to update the transition probabilities at a time that may be independent of a time at which other agents update transition probabilities used by the other agents to perform stochastic simulations.

The computing system may be operative such that updating the transition probabilities may be triggered by receipt of the observation information.

The computing system may be operative such that updating the transition probabilities may be an event-driven process.

The computing system may be operative such that the observation information may be received from another agent and/or from a central module via a communication channel.

The computing system may be operative such that the communication channel may be established only intermittently in communication time intervals.

The computing system may be operative such that the observation information may be received in one of the communication time intervals in which the communication channel is established.

The computing system may be operative such that the communication time intervals may be predetermined time intervals.

The computing system may be operative to execute a second agent to determine a second prognosis for a future evolution of an asset health state of a second asset of the set of assets by performing a second stochastic simulation, the stochastic simulation being performed using second transition probabilities for transitions between states of the discrete state model.

The computing system may be operative such that the agent and the second agent may use the same discrete state model.

The computing system may be operative such that the second agent updates the second prognosis, including updating the second transition probabilities .

The computing system may be operative such that the agent may share information on the updated transition probabilities with other agents of the set of agents in an asynchronous manner.

The computing system may be operative such that the observation information may be a function of sensor measurements obtained for the asset with which the agent is associated.

The computing system may be operative such that the agent and the second agent may use transition probabilities that may initially be the same, but which are updated at different times and/or in different ways. Thus, as time passes during ongoing operation of the asset and the second asset, the transition probabilities used by the agent and the second transition probabilities used by the second agent for performing stochastic simulations may deviate from each other.

The computing system may be operative such that the agent may output the observation information or data derived therefrom to at least one other agent of the set of agents and/or to a central module.

The computing system may be operative such that the agent outputs the observation information or data derived therefrom to at least one other agent of the set of agents and/or to a central module in response to a trigger event, such as receipt of the observation information.

The computing system may be operative such that a communication channel between the agent and the at least one other agent and/or the central module may be selectively established in an intermittent manner.

The computing system may be operative such that the agent outputs the observation information or data derived therefrom to at least one other agent of the set of agents and/or to a central module selectively only when the communication channel is available.

The computing system may be operative such that the data derived from the observation information may be the updated transition probabilities and/or an updated Bayesian probability table.

The computing system may be operative such that the observation information may be a function of sensor measurements obtained for at least one other asset different from the asset with which the agent is associated.

The computing system may be operative such that the observation information may comprise modified transition probabilities and/or modified Bayesian conditional probabilities.

The computing system may be operative such that the modified transition probabilities and/or modified Bayesian conditional probabilities may be received from a central module that receives and combines information on updated transition probabilities determined by two or more agents of the set of agents.

The computing system may be operative such that the discrete state space may have n states, with n being an integer greater than two.

The computing system may be operative such that the computing system may be operative such that transitions between the states may be governed by a transition matrix.

The computing system may be operative such that the transition matrix may be sparsely encoded.

The computing system may be operative such that the transition matrix used in the stochastic simulation may have only n-1 non-zero off-diagonal matrix elements.

The computing system may be operative such that the observation information may consist of n-1 transition probabilities.

The computing system may be operative such that the discrete state space may comprise at least one state in which operation of the asset may be not adversely affected by a failure.

The computing system may be operative such that the discrete state space may comprise at least one state in which operation of the asset may be adversely affected by a failure, but the asset continues to operate.

The computing system may be operative such that the discrete state space may comprise a state in which the asset may be inoperative due to a failure.

The computing system may be operative such that the stochastic simulation may be a Markov Chain Montel Carlo, MCMC, simulation.

The computing system may be operative such that the Markov Chain may have order 1, i.e., transitions may be dependent on the state in which the Markov Chain model is currently, while being independent of previous transitions to that state.

The computing system may be operative such that the Markov Chain model may be such that states have qualitative interpretation that is monotonically ordered, i.e., it is always possible to compare two states in terms of severity of degradation.

The computing system may be operative such that each state of the discrete state space may have a non-zero transition probability to at most one other state of the discrete state space, which describes more severe degradation, and non-zero transition probability to itself.

The computing system may be operative such that the Markov Chain model may be such that states of the discrete state space that do not correspond to failure of the asset have a non-zero transition probability to just one other state of the discrete state space.

The computing system may be operative such that the Markov Chain model may be such that a state of the discrete state space that corresponds to failure of the asset does not have any non-zero transition probability to a state other than itself.

The computing system may be operative to execute a set of agents.

The computing system may be operative such that each agent of the set of agents may perform a stochastic simulation to determine a prognosis for a future evolution of an asset health state of the asset associated with the respective agent.

The computing system may be operative such that the agents of the set of agents may be operative to independently update the transition probabilities used in the stochastic simulations.

The computing system may be operative to execute a central module to receive information on the transition probabilities updated by the agent.

The computing system may be operative such that the central module may determine modified transition probabilities based on the received information.

The computing system may be operative such that the central module may output the modified transition probabilities to the set of agents.

The computing system may be operative such that the central module weighs received information with a weighting factor top determine the modified transition probabilities.

The computing system may be operative such that the weighting factor may be dependent on an importance associated with the updated transition probabilities determined by the agent.

The computing system may be operative to execute a set of agents to perform a prognostic health analysis for a set of assets, wherein all assets of the set of assets may be of the same or similar asset type.

The computing system may be operative to execute a set of agents to perform a prognostic health analysis for a set of assets, wherein all assets of the set of assets may be industrial assets or electric power system assets.

The computing system may be operative to execute a set of agents to perform a prognostic health analysis for a set of assets, wherein all assets of the set of assets a distributed energy resource (DER) unit, a power generator, a power transformer, or a distribution transformer.

The computing system may be operative such that the generated output may be a remaining useful life (RUL) curve, a probability of failure (PoF) curve, or other information representing the degradation of the asset.

The computing system may be operative such that the generated output may be a control signal used to control the asset with which the agent is associated.

The computing system may be operative such that the generated output may be a control signal used for scheduling a down-time of the asset based on the stochastic simulation, for scheduling maintenance, inspection or replacement work based on the stochastic simulation, and/or for changing maintenance or inspection intervals based on the stochastic simulation.

The computing system may be operative such that the generated output may be dependent on the stochastic simulation with the transition probabilities updated by the agent.

The computing system may be operative to output the output via a human machine interface (HMI) or a control command interface.

The computing system may be operative to operate and/or control a set of assets, with the computing system being operative to perform a prognostic asset health analysis for each asset of the set of assets and automatically take a control or output action based on the prognostic asset health analysis.

The computing system may be operative such that the control or output action may comprise performing at least one of the following: generating an alarm or warning based on the computed prognostic asset health state evolution; generating a control signal to control operation of the asset based on the computed prognostic asset health state evolution; scheduling a down-time of the asset based on the computed evolution of the asset health state; scheduling maintenance or inspection work based on the computed evolution of the asset health state; scheduling replacement work based on the computed evolution of the asset health state; changing maintenance or inspection intervals based on the computed evolution of the asset health state.

The computing system may be operative such that the control or output action may comprise outputting information on a failure probability as a function of operating time, on a scheduled or rescheduled maintenance work interval, or on a scheduled replacement work interval via an interface.

An industrial or electric power system according to an embodiment comprises a set of assets and the computing system to perform a prognostic asset health analysis for the assets.

The computing system may be a decentralized control system of the industrial or power system.

Various effects and advantages are associated with the invention. The stochastic simulation executed by an agent to obtain a prognosis for the future evolution of an asset health state may be updated using dynamically arriving data from comparable industrial or power system assets (e.g., a learning curve for a green field project).

Information between agents responsible for performing the asset health state analysis for several comparable industrial assets can be efficiently transferred. Information may be shared between the agents, thereby providing fleet learning, even when the agents associated with different assets operate as semi-independent agents.

The information between agents responsible for different assets may be shared in a compressed form without the need for storing and sending full data. For illustration, it may be sufficient to store and send only non-zero matrix elements of transition matrices, optionally with information indicating the relative importance.

When using a discrete state space and non-zero transition probabilities to at most one other state of the discrete state space that corresponds to the next degree of severity of degradation, only a small number of parameters is required for sharing information on updated transition probabilities between agents and/or between agents and the central module.

Additional information can be generated, such as quantitative information on a variance or confidence interval of a RUL or PoF curve, which can be used in prescriptive tools or applications.

BRIEF DESCRIPTION OF THE DRAWINGS

The subject-matter of the invention will be explained in more detail with reference to preferred exemplary embodiments which are illustrated in the attached drawings, in which:

Figure 1 is a schematic view of a power system having a computing system according to an embodiment.
Figure 2 is a schematic view of a power system having a computing system according to an embodiment.
Figure 3 is a diagram representing a Markov Chain model employed in embodiments.
Figure 4 is a block diagram showing agents according to an embodiment.
Figure 5 is a block diagram showing agents and a central module according to an embodiment.
Figure 6 is a flow chart of a method according to an embodiment.
Figure 7 is a graph illustrating operation of a method and computing system according to an embodiment.
Figure 8 are bar diagrams illustrating a time evolution of state occupation probabilities.
Figure 9 is a graph illustrating exemplary output generated by a method and computing system according to an embodiment.
Figure 10 is diagram illustrating operation of a method and system according to an embodiment.
Figure 11 is diagram illustrating operation of a method and system according to an embodiment.

Figure 12 is a block diagram of a computing system according to an embodiment.
Figure 13 is a block diagram of a computing system according to an embodiment.

DETAILED DESCRIPTION OF EMBODIMENTS

Exemplary embodiments of the invention will be described with reference to the drawings in which identical or similar reference signs designate identical or similar elements. While some embodiments will be described in the context of assets of a power system, such as distributed energy resource (DER) units or transformers, the embodiments are not limited thereto. The features of embodiments may be combined with each other, unless specifically noted otherwise.

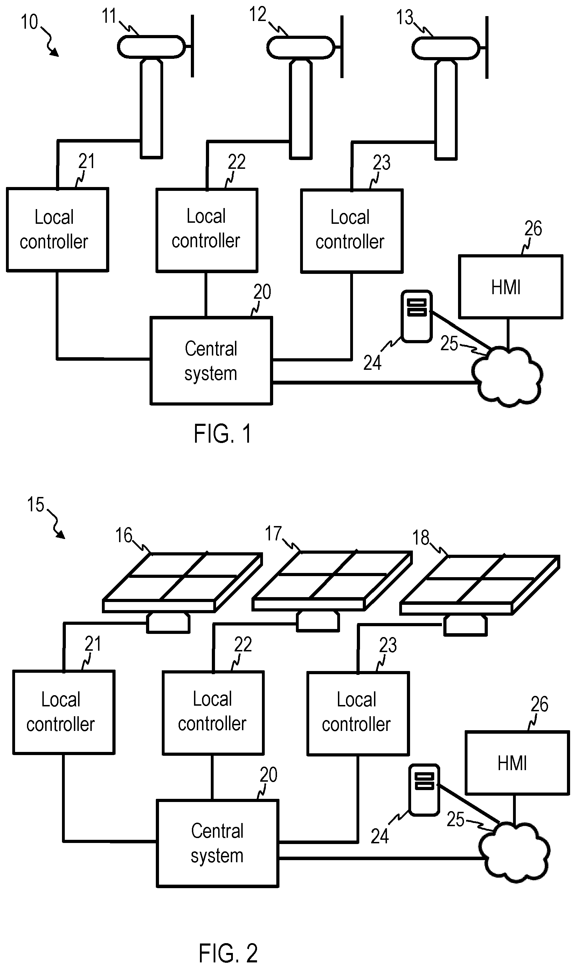

Figures 1 and 2 are schematic views of a power system 10, 15. The power systems 10, 15 comprise a plurality of assets. The assets may include generators, such as distributed energy resource (DER) units 11-13, 16-18, transformers, or other electric power system assets.

The power system 10, 15 includes a control system comprising local controllers 21-23, each associated with an asset. The control system may include a central system 20. The central system 20 may be communicatively coupled with the local controllers. The central system 20 may be communicatively coupled with a remote (e.g., cloud-based) server system 24.

As will be described in more detail below, the local controllers 21-23, the central system 20, and/or the remote server system 24 may be operative to perform a prognostic asset health analysis, using a discrete state model. The discrete state model may be a Markov Chain model. The discrete model may have a specific configuration, as will be explained below.

Plural agents may be deployed, each associated with and responsible for performing the prognostic asset health analysis for one of the assets. Each agent may be operative to locally update transition probabilities between states of a discrete state model (such as a Markov Chain model). This may be done in an event-driven way or in a time-driven way. The updates for the transition probabilities may be dependent on one or several of:

- sensor data for the asset for which the agent determines a prognosis for a future evolution of the asset health state;
- transition probabilities determined by another agent for another asset of the same or similar asset type;
- transition probabilities determined by a central module that can at least intermittently communicate with the agents.

The agents may also be referred to as "local agents". Updates of transition probabilities performed locally by the agents using information captured for the associated asset may also be referred to as "local updates".

The agents may, but do not need to be executed on the local controllers 21-23. The central module may be executed on the central system 20 and/or the remote sever system 24, without being limited thereto.

The agents executed on one or several of the local controllers 21-23, the central system 20, and/or the remote server system 24 may be operative to perform a stochastic simulation that includes a plurality of independent simulations, in particular a Markov Chain Monte Carlo (MCMC) simulation, to perform the prognostic asset health analysis.

Results of the prognostic asset health analysis may be used by the local controllers 21-23, the central system 20, and/or the remote server system 24 for scheduling down-times, maintenance work, replacement work or for automatically performing control operations. The local controllers 21-23, the central system 20, and/or the remote server system 24 may be operative to generate and output control or output data. Output may be provided via a human machine interface (HMI) 26. The HMI may be coupled to the local controllers 21-23, the central system 20, and/or the remote server system 24 via the internet or another wide area network (WAN).

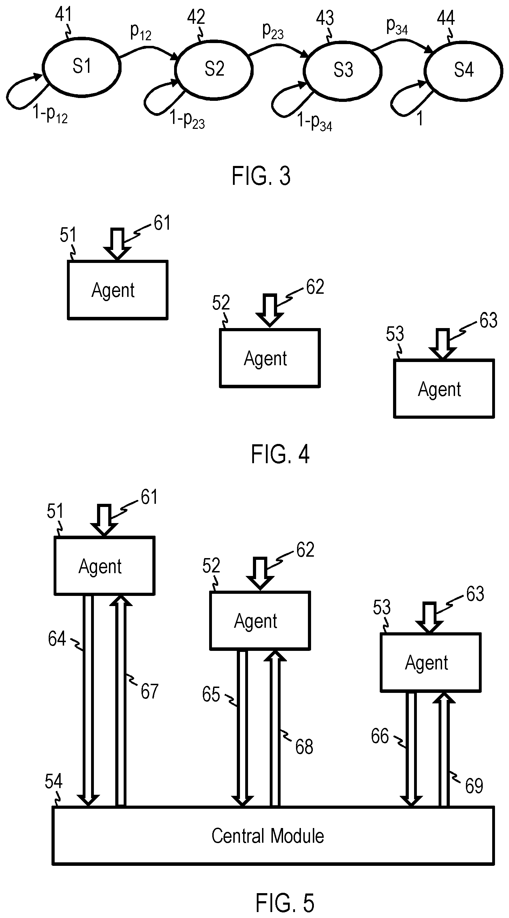

As will be explained in more detail with reference to Figure 3 to Figure 12, the prognostic asset health analysis may involve simulating time-evolution of an asset.

The techniques described herein may be used when no sensor data are available for a specific asset for which the prognostic asset health analysis is performed by an agent. For illustration, a remaining useful life (RUL) curve or other prognostic asset health prediction may be computed for an asset, such as asset 11, 16, even when no sensor data is (yet) available for that asset 11, 16. Information on a degradation of similar or identical assets 12, 13, 17, 18 detected during life operation of the asset 11, 16 may be used to dynamically update transition probabilities used in a stochastic simulation.

Fleet learning may thus be implemented, that allows information to be used for updating the prognosis for future evolution of asset health states of a set of assets 11-13, 16-18, using a set of agents, which can take advantage of information on degradation as it becomes dynamically available during operation.

In order to reduce the amount of data that needs to be exchanged between the agents and/or between the agents and the central module, a specific discrete state model with a set of discrete states and specifically designed transition probabilities may be used.

Figure 3 is a graph of a Markov Chain model that can be used in methods and computing systems according to embodiments. A state space of the Markov Chain model consists of a set of n states S1, ...., Sn. In the present case, n=4. However, a state space having a different number of states (e.g., n=3 or n=5 or n>5) may be used instead.

The states of the state space may be ordered in such a manner that a severity of degradation of the asset health increases from S1 to S2, from S2 to S3, etc. I.e., all but the last state of the Markov Chain model may be followed by another state that represents a more severe degradation. The last state of the Markov Chain model may represent the most severe degradation.

The Markov Chain model may be set up in such a way that the 1st, 2nd ... (n-1)th state 41-43 have a non-zero transition probability $p_{12}$, $p_{23}$, $p_{34}$ to just one other state of the state space. The nth state 44 does not have a non-zero transition probability to a state other than itself.

For illustration, the Markov Chain model may be such that there is a finite transition probability $p_{12}$ from the first state 41 to the second state 42, but a zero transition probability from the second state 42 back to the first state 41. With probability $1-p_{12}$, the first state 41 is maintained in an iteration of the stochastic simulation.

The Markov Chain model may be such that there is a finite transition probability $p_{23}$ from the second state 42 to the third state 43, but a zero transition probability from the third state 43 back to the second state 42. With probability $1-p_{23}$, the second state 42 is maintained in an iteration of the stochastic simulation.

The Markov Chain model may be such that there is a finite transition probability $p_{34}$ from the third state 43 to the fourth state 44, but a zero transition probability from the fourth state 44 back to the third state 43. With probability $1-p_{34}$, the third state 43 is maintained in an iteration of the stochastic simulation.

The final state 44 of the Markov Chain model may correspond to a state in which the asset has failed to such a degree that it is no longer operative.

The other states 41-43 of the state space may correspond to different degrees of degradation.

For illustration, a first state 41 (which may also be referred to as "unknown" state S1) may correspond to an asset state in which there is no known degradation that would affect asset operation. For illustration, the first state 41 may correspond to a state in which no failures are recorded or in which no failures can be recorded.

A second state 42 (which may also be referred to as "incipient" state S2) may correspond to a detectable failure that are of such minor severity that they do not immediately affect the asset's performance. Such incipient failures are usually characterized by short Mean Time to Repair (MTTR), low repair costs, and low impact on overall performance. If not maintained properly, the incipient failures can evolve into more severe degraded failures.

A third state 43 (which may also be referred to as "degraded" state S3) may correspond to a mode that describes failures that significantly reduce the system's performance but do not lead to immediate asset shutdown. Usually such failures are caused by components deterioration. If left untreated, the degraded will eventually lead to the critical failure.

The fourth state 44 (which may also be referred to as "critical" state S4) may correspond to the most severe failure mode that causes an immediate and complete shutdown of the asset. It is usually characterized by long and costly (due to complete production loss) MTTR.

Initial transition probabilities of the Markov Chain model may be received via a user interface from a human expert or may be determined using historical data. Various sets of transition probabilities $p_{12}$, $p_{23}$, $p_{34}$ may be used. For illustration, N > 1, in particular N > 2 different sets of transition probabilities $p_{12}$, $p_{23}$, $p_{34}$ may be used to simulate the evolution of the asset health state under different ambient and/or operating conditions.

For a discrete state space having n=4 states that are arranged as explained above (i.e., in an order of increasingly severe degradation from 1 to n), a transition matrix for the model may be defined as

$$T = \begin{pmatrix} 1 - p_{12} & 0 & 0 & 0 \\ p_{12} & 1 - p_{23} & 0 & 0 \\ 0 & p_{23} & 1 - p_{34} & 0 \\ 0 & 0 & p_{34} & 1 \end{pmatrix} \qquad (1)$$

Generally, for a discrete state space having n states that are arranged as explained above (i.e., in an order of increasingly severe degradation from 1 to n), a transition matrix for the model may be defined as

$$T = \begin{pmatrix} 1 - p_{12} & 0 & 0 & 0 & 0 \\ p_{12} & 1 - p_{23} & 0 & 0 & 0 \\ 0 & p_{23} & 1 - p_{34} & 0 & 0 \\ \vdots & \vdots & \vdots & \ddots & \vdots \\ 0 & 0 & 0 & p_{n-1,n} & 1 \end{pmatrix} \qquad (2)$$

The transition matrix T may be a sparse matrix. The transition matrix T may have n-1 non-zero off-diagonal matrix elements only, which are arranged below the diagonal of the matrix. The transition matrix T is fully defined by the n-1 transition probabilities $p_{12}$, $p_{23}$, ... $p_{n-1,n}$. These n-1 transition probabilities fully define the possible transitions between the different states of the discrete state model.

It will be appreciated that the transition matrix T may be dependent on the asset, even when the dynamics are determined for a set of identical or similar assets. I.e., different agents may use different transition probabilities $p_{12}$, $p_{23}$, ... $p_{n-1,n}$, at least as the transition probabilities are being updated during operation.

Figure 4 is a block diagram showing a system according to an embodiment. A set of agents 51, 52, 53 is deployed. Each of the agents 51, 52, 53 is associated with an asset, and is responsible for determining a prognosis for a future evolution of an asset health state for that specific asset.

The agents 51, 52, 53 may be executed on different local controllers 21-23. The agents 51, 52, 53 may be executed on the central system 20 and/or the remote server system 24.

A first agent 51 performs a stochastic simulation (e.g., a MCMC) to simulate a degradation process of a first asset 11, 16. The first agent 51 uses a transition matrix $T_1$. The transition matrix $T_1$ may be initialized identically for all agents 51-53. During operation, the first agent 51 may update the transition matrix $T_1$ in a time-dependent manner.

The first agent 51 may update the transition matrix $T_1$ in an event-driven manner. For illustration, the transition matrix $T_1$ may be updated in response to receipt of first observation information 61 and/or in response to the intermittent establishment of a communication channel for receipt of the first observation information 61 via a push or pull mechanism. The first observation information 61 may be or include any one or any combination of the following:

- Sensor data for the first asset 11, 16 for which the first agent 51 determines a prognosis for a future evolution of the asset health state.
- Transition probabilities $p_{12}$, $p_{23}$, ... $p_{n-1,n}$, or Bayesian probability table data determined by another agent 52, 53 for another asset 12, 13, 17, 18 of the same or similar asset type as the first asset 11, 16.
- Transition probabilities determined by a central module that can at least intermittently communicate with the first agent 51, as will be explained in more detail with reference to Fig. 5.

A second agent 52 performs a stochastic simulation (e.g., a MCMC) to simulate a degradation process of a second asset 12, 17. The second agent 52 uses a transition matrix $T_2$. The transition matrix $T_2$ may be initialized identically for all agents 52-53. During operation, the second agent 52 may update the transition matrix $T_2$ in a time-dependent manner. The transition matrix $T_2$ may have a time evolution that is different from a time evolution of the transition matrix $T_1$ used by the first agent 51.

The second agent 52 may update the transition matrix $T_2$ in an event-driven manner. For illustration, the transition matrix $T_2$ may be updated in response to receipt of second observation information 62 and/or in response to the intermittent establishment of a communication channel for receipt of the second observation information 62 via a push or pull mechanism. The second observation information 62 may be or include any one or any combination of the following:

- Sensor data for the second asset 12, 17 for which the second agent 52 determines a prognosis for a future evolution of the asset health state.
- Transition probabilities $p_{12}$, $p_{23}$, ... $p_{n-1,n}$, or Bayesian probability table data determined by another agent 52, 53 for another asset 11, 13, 16, 18 of the same or similar asset type as the second asset 12, 17.
- Transition probabilities determined by a central module that can at least intermittently communicate with the second agent 52, as will be explained in more detail with reference to Fig. 5.

A third agent 53 performs a stochastic simulation (e.g., a MCMC) to simulate a degradation process of a third asset 13, 18. The third agent 53 uses a transition matrix $T_3$. The transition matrix $T_3$ may be initialized identically for all agents 53-53. During operation, the third agent 53 may update the transition matrix $T_3$ in a time-dependent manner. The transition matrix $T_3$ may have a time evolution that is different from a time evolution of the transition matrix $T_1$ used by the first agent 51 and/or a time evolution of the transition matrix $T_2$ used by the second agent 52.

The third agent 53 may update the transition matrix $T_3$ in an event-driven manner. For illustration, the transition matrix $T_3$ may be updated in response to receipt of third observation information 63 and/or in response to the intermittent establishment of a communication channel for receipt of the third observation information 63 via a push or pull mechanism. The third observation information 63 may be or include any one or any combination of the following:

- Sensor data for the third asset 13, 18 for which the third agent 53 determines a prognosis for a future evolution of the asset health state.
- Transition probabilities $p_{12}$, $p_{23}$, ... $p_{n-1,n}$, or Bayesian probability table data determined by another agent 53, 53 for another asset 11, 12, 16, 17 of the same or similar asset type as the third asset 13, 18.
- Transition probabilities determined by a central module that can at least intermittently communicate with the third agent 53, as will be explained in more detail with reference to Fig. 5.

The agents 51-53 may update their transition matrices in an asynchronous manner. The updated transition matrices may be used for the simulation at least from the time of update forward. Optionally, the stochastic simulation may be repeated for the past prior to generation of the updated transition matrices, thereby re-computing the prognosis not only for the future, but also for the past.

The agents 51-53 may provide information on the updated transition matrices to the other agents of the system, either directly or via a central module. With the transition matrices being sparse matrices, only very few parameters (e.g., only n-1 independent transition probabilities $p_{12}$, $p_{23}$, ... $p_{n-1,n}$) need to be transmitted.

Information on an importance of an update may be computed. The information on the importance may quantify how reliable the agent 51-53 performing the update considers the updated transition probabilities $p_{12}$, $p_{23}$, ... $p_{n-1,n}$ to be.

Figure 5 is a block diagram showing a system according to an embodiment. A set of agents 51, 52, 53 is deployed. Each of the agents 51, 52, 53 is associated with an asset, and is responsible for determining a prognosis for a future evolution of an asset health state for that specific asset.

The agents 51, 52, 53 may be executed on different local controllers 21-23. The agents 51, 52, 53 may be executed on the central system 20 and/or the remote server system 24.

A central module 54 may be executed on the central system 20 and/or the remote server system 24.

The agents 51, 52, 53 and the central module 54 may be communicatively coupled. Communication channels between the agents 51, 52, 53 and the central module 54 may, but do not need to be persistent communication channels. The communication channels may be established in an intermittent manner. For illustration, the communication channels may be established in an event-driven or periodic manner.

When the first agent 51 updates transition probabilities used in the stochastic simulation performed by the first agent based on available local information 61, it may provide information 64 on the updated transition probabilities to the central module 54. The central module 54 may process the information 64 and may optionally aggregate it with information on updates of transition probabilities performed by other agents 52, 53. The central module 54 may provide updated, more reliable information on the transition probabilities and/or the Bayesian probabilities used to compute the transition probabilities to the second and third agents 52, 53 as data 68, 69. The data 68, 69 also represents a form of "observation information" in the sense of this application, because it is based on degradation observed during real-life operation of the industrial or electric power system.

When the second agent 52 updates transition probabilities used in the stochastic simulation performed by the second agent based on available local information 62, it may provide information 65 on the updated transition probabilities to the central module 54. The central module 54 may process the information 65 and may optionally aggregate it with information on updates of transition probabilities performed by other agents 51, 53. The central module 54 may provide updated, more reliable information on the transition probabilities and/or the Bayesian probabilities used to compute the transition probabilities to the first and third agents 51, 53 as data 67, 69. As mentioned above, the data 67, 69 represents a form of "observation information" in the sense of this application, because it is based on degradation observed during real-life operation of the industrial or electric power system.

When the third agent 53 updates transition probabilities used in the stochastic simulation performed by the third agent based on available local information 63, it may provide information 66 on the updated transition probabilities to the central module 54. The central module 54 may process the information 65 and may optionally aggregate it with information on updates of transition probabilities performed by other agents 51, 52. The central module 54 may provide updated, more reliable information on the transition probabilities and/or the Bayesian probabilities used to compute the transition probabilities to the first and second agents 51, 52 as data 67, 68. As mentioned above, the data 67, 68 represents a form of "observation information" in the sense of this application, because it is based on degradation observed during real-life operation of the industrial or electric power system.

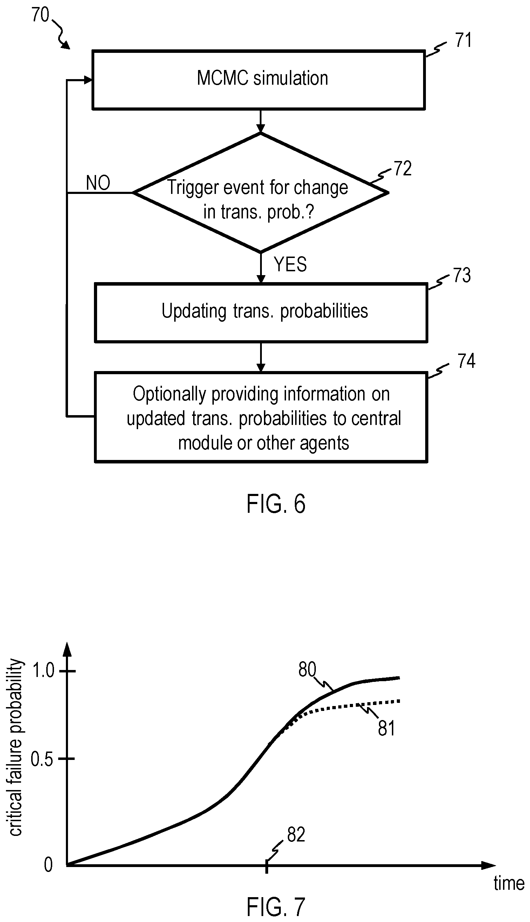

Figure 6 is a flow chart of a method 70 according to an embodiment. The method 70 may be performed automatically by each one of the agents 51-53 that may be executed by one or several IC(s) in the local controllers 21-23, the central system 20, and/or the remote server system 24. Different agents 51-53 may perform the method 70 independently of each other.

At step 71, MCMC simulations or other stochastic simulations of the Markov Chain model are performed. Step 71 may include performing more than 100, more than 1000, more than 2000, more than 5000 simulations, more than 10000 simulations, more than 50000 simulations, more than 100000 simulations, more than 500000 simulations, or one million or more simulations. With increasing computational power, there is no upper bound for the number of simulations. The simulations may be performed in parallel.

While a large number of simulations (e.g., more than 100 or more than 1000) may be performed for any set of transition probabilities $p_{12}$, $p_{23}$, ... $p_{n-1,n}$ of the Markov Chain model, the transition probabilities need not be the same for all simulations performed by the same agent. Different sets of transition probabilities $p_{12}$, $p_{23}$, ... $p_{n-1,n}$ may be used to quantitatively assess the impact of different operating conditions and/or ambient conditions.

The simulations may be performed over a time horizon. The time horizon may be dependent on the specific asset. For power system assets such as transformers, typical lifetimes are in excess of 10 years, in excess of 20 years, or even longer. Thus, the stochastic simulations may be performed over time horizons that are in excess of 10 years, in excess of 20 years, or even longer. The time horizons may also be shorter, depending on the asset. For illustration, the prognostic time horizon may be 1 week or more, 1 month or more, etc. The prognostic time horizon may be measured in and may include a plurality of cycles, e.g., a certain number of flight cycles, ship route cycles, train route cycles, etc.

An initial state for the simulations may be selected depending on information on the asset is available. If no information on the asset is available, the simulations may all start with the first state 41 in which there is no information on detectable failures. If information on the asset is available, e.g. sensor data collected after installation, this sensor data may be used for initializing the simulations. A distribution of initial states for the various MCMC or other stochastic simulations may be selected depending on whether the already collected sensor data indicates that there is no recognizable failure that affects asset performance or whether there are detectable issues that affect asset performance.

Furthermore, the initialization can be probabilistic. For illustration, if the information available is not conclusive whether the asset is in state 41 or 42 with equal chances to be in either of these states, the system can be initialized with a Bayesian prior distribution such that probability of the asset being in state 41 equals to 50% and probability of the asset being in state 42 equals to 50%. Other probabilistic initiations with more states and different probabilities may also be possible.

At step 72, it is determined whether a trigger event for updating the transition probabilities is fulfilled. The trigger event may be receipt of observation information, which may be based on sensor data captured for the asset during ongoing operation and/or which may depend on observations for other assets of the same or a similar type.

If the trigger event for changing the transition probabilities is not fulfilled, the method may return to step 71. If the trigger event for changing the transition probabilities is not fulfilled, the method may continue at step 73.

At step 73, the transition probabilities may be updated. Updating the transition probabilities may be performed based on an observed degradation dynamic of one or several assets 11-13, 16-18, as compared to the dynamics expected based on the MCMC simulations. Updating the transition probabilities at step 73 may include re-computing the transition probabilities based on Bayesian conditional probabilities, which may be derived from the observed degradation of the assets 11-13, 16-18.

At step 74, information on the updated transition probabilities may be provided to other agents and/or the central module 74. Importance information quantifying the relative importance of the update (e.g., based on the amount of sensor data used in computing the updated transition probabilities) may also be provided to other agents and/or the central module 74 at step 74.

The method may further comprise computing a probability, as a function of time over the time horizon, that the Markov Chain model has evolved into the critical state that corresponds to an inoperative asset. The method may comprise computing a time evolution of a health index that, for any time during the prognostic time horizon, depends on the probabilities for the Markov Chain model to be in the 1st, 2nd, ... nth state 41-44 of the Markov Chain model. The method may comprise computing a RUL curve, a PoF curve, or another output that indicates a probability of asset failure as a function of operating time.

The method may further comprise generating output. The output may include information on the asset's remaining useful life as a function of time. The output may include information on the asset's probability of failure as a function of time. The output may include control and/or output data that is obtained by further processing of the simulations results, such as a schedule for inspection, maintenance or replacement work on the asset.

Figure 7 is a schematic view of an output 80 that may be automatically generated and output. The output 80 may indicate the probability that the Markov Chain model has evolved into the critical state that corresponds to an inoperative asset. The output 80 may be determined by computing, for each one of a plurality of times over the time horizon, the fraction of simulations in which the Markov Chain model is in the critical state S4 of the state space.

As illustrated in Figure 7, the transition probabilities used in the stochastic simulation are updated in response to receipt of more reliable information on the asset degradation at a time 82. At least from time 82 onward, the prognosis for the future evolution of the asset health state is computed using the updated transition probabilities. Optionally, the evolution may also be re-computed for times prior to time 82.

For comparison, Figure 7 also shows curve 81 that would have been obtained if the transition probabilities had not been updated.

Additional or alternative output may be generated. For illustration, a RUL curve or other information indicative of the asset's degradation may be processed to automatically schedule inspection, maintenance, or replacement work, to output the schedule information to an operator and/or to automatically schedule down-times.

Alternatively or additionally, the RUL curve or other information indicative of the asset's degradation may be processed, using threshold comparisons or other triggers, to determine whether and when alarms, warnings, or other signals are to be output to the operator.

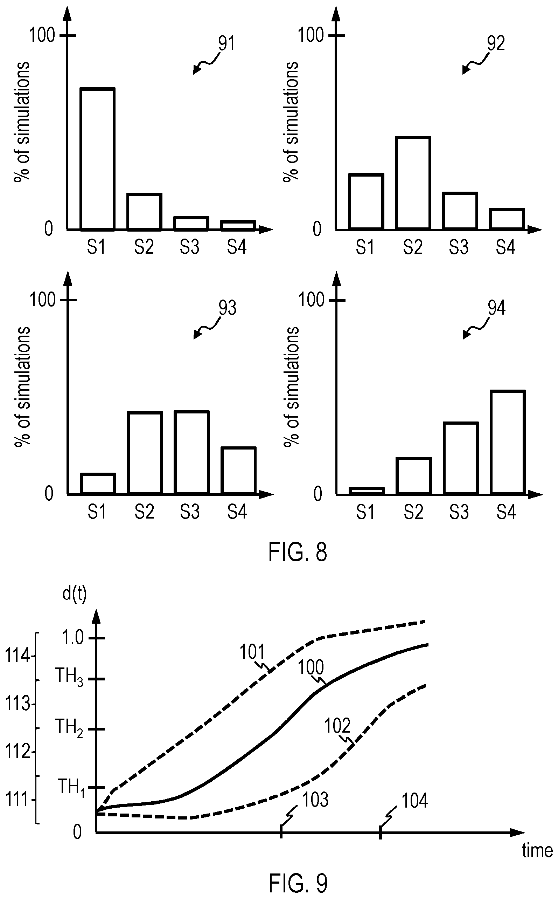

Figure 8 illustrates the stochastic distribution 81-84 of the population of the various states S1-S4 of the state space of the Markov Chain model. The distribution 81 corresponds to a first time in which most of the Markov Chain model simulations are still in the state S1 that corresponds to an asset with no detectable degradation. The distributions 82, 83 correspond to later second and third times in which the states S2 and S3 that correspond to incipient or more advanced degradation have become more populated. The distribution 84 corresponds to an even later fourth time at which the critical state S4 corresponding to asset shutdown is populated most, reflecting that it is more probable for the asset to be in the inoperative state by that time than in an operative state.

While relevant prognostic asset health predictions may be obtained from the probability for the asset to be in the critical state S4, which is the final state of the Markov Chain model, the output into which the results of the stochastic simulations are processed may depend on all probabilities $p_1, p_2, ... p_n$ for the Markov Chain model to be in the respective 1st, 2nd, ... nth state, as determined by the stochastic simulations.

For illustration, for any time j within the time horizon over which the stochastic simulations are performed, a scalar function

$$d(j) = \Sigma_{i=1, ..., n} \, p_i(j) \times m_i \qquad (3)$$

may be computed, where $p_i(j)$ designates the probability for the Markov Chain model to be in the ith state at time j, as determined by the stochastic simulations, and where $m_i$ denotes a scalar value that is a monotonous, in particular strictly monotonous, function of state label i. For illustration, all $m_i$ may be selected from an interval such that $m_1 \leq m_2 \leq ... \leq m_n$, in particular such that $m_1 < m_2 < ... < m_n$.

By outputting the function d(j) or information derived therefrom, a degradation that results in reduced RUL may be reflected more adequately even if it has not yet resulted in the asset reaching the critical state S4.

The function d(j) is indicative of a degradation and can be related to a health index h(j) by h(j) = 1 - d(j), when d(j) is constrained to take values between 0 and 1.

The function d(j) or health index h(j) may also be used to identify transitions between different states of the discrete state model based on sensor measurements. For illustration, sensor measurements may be processed into a degradation function d(j) or health index h(j). Heuristics may be used for this processing. The value of the degradation function d(j) or health index h(j) may be subject to one or several threshold comparisons to assign an asset state, as observed in a set of sensor measurements, to one of the discrete states S1, ..., Sn of the discrete state model. Processing the sensor measurements into the degradation function d(j) or health index h(j) may be done in various ways. The scalar function may take sensor measurements captured at various times as inputs and may process them into a scalar function that represents the observed evolution of asset health, as reflected by the health index h or degradation index d.

Various techniques may be used to compute the scalar function that is used to identify transitions between the discrete states. For illustration, sensor measurements may be compared to a range of operation values. For each sensor measurement outside the range, a penalty may be imposed. Weighted summation or other processing that combines products of a weighting factor for a sensor measurement and a value that depends on the deviation of the sensor measurement from the normal operation value range may be used. The weighting factors are dependent on the respective sensor and indicate the importance of the measurement for asset health.

Tools are known that provide a mapping of sensor measurements into a continuous health or degradation functions for a wide variety of assets, including, without limitation, circuit-breakers, batteries (such as Li-ion batteries), or transformers. For illustration, tools such as the Ellipse APM or RelCare tool process sensor measurements to provide a function having a value in a continuous range and indicating the asset health. Normalization may be used to normalize the health or degradation function to a desired range (such as from 0 to 1).

The techniques disclosed herein allow any health or degradation function to be mapped to the discrete states of the state model, using optional normalization and a threshold comparison.

In an exemplary implementation, the transition probabilities may be determined based on conditional probabilities. For illustration, the transition probability at a time j for a transition from the ith state to the (i+1)th state (where $1 \leq i \leq n-1$) may be determined as

$$p_{i \rightarrow i+1}(j) = \# \, (x_{j+1} = S_{i+1} \wedge x_j = S_i) / \# \, (x_j = S_i). \qquad (4)$$

In Equation (4), the numerator represents the number of assets which were in the ith state at time j and transitioned to the (i+1)th state at time j+1. The denominator represents the number of assets which were in the ith state at time j.

Averaging or other processing may be performed to obtain the probabilities of a homogeneous Markov Chain model.

When sensor data are available for different groups of assets that have the same asset type (e.g., photovoltaic panel with a certain power rating range; wind turbine generator with a certain power rating range; transformer of a rating in a certain interval), but which are subjected to different operating conditions and/or ambient conditions, the transition probabilities may be updated independently for each of the groups.

Figure 9 illustrates an output of a curve 100 that is indicative of the asset's degradation as a function of time as determined by the stochastic simulations. The curve 100 may be dependent on the time evolution of all probabilities $p_1$,

$p_2$, ... $p_n$ for the Markov Chain model to be in the respective 1st, 2nd, ... nth state, as determined by the stochastic simulations.

The various states of the Markov Chain model may be associated with a plurality of intervals 111-114. For illustration, for a health index h within interval 111, the asset may be determined to be in the state S1 in which there is no known degradation. For a health index h within interval 112, the asset may be determined to be in the state S2 in which there is no incipient degradation that does not affect the performance. For a health index h within interval 113, the asset may be determined to be in the state S3 in which there is a more severe degradation that affects the performance, but does not lead to immediate asset shutdown. For a health index h within interval 114, the asset may be determined to be in the state S4 in which the state is critical, leading to immediate asset shutdown.

Thresholds $TH_1$, ... $TH_{n-1}$ may define the upper and lower boundaries of the intervals 111-114. Comparisons to threshold $TH_1$, ... $TH_{n-1}$ may be used when initializing the stochastic simulations for an asset. For illustration, available sensor data for the asset may be processed into a scalar representing the asset's health index h or degradation index $d = 1 - h$, and the scalar may be compared to the thresholds $TH_1$, ... $TH_{n-1}$ to determine how the simulations are to be initialized.

By performing stochastic simulations such as MCMC, not only the evolution of the asset's health state, but also the reliability associated with the determined evolution may be automatically determined and output.

The information on the reliability may take various forms. For illustration, an evolution of a confidence interval around the curves 80, 100 may be determined as a function of time over a prognostic time horizon. The time evolution of the confidence interval may indicate, for any time j of the prognostic time horizon, a lower boundary and an upper boundary for the critical failure probability 80 or for a health index h. The upper and lower boundaries may be determined such that at least a certain percentage (e.g., at least 70%, 80%, 90%, or 95%) of the stochastic simulations gives rise to a critical failure probability 80 or a health index h within the range between the upper and lower boundaries. Exemplary upper and lower boundaries 101, 102 indicating the time evolution of the confidence interval are shown in Figure 7.

Alternatively or additionally, the upper and lower boundaries 101, 102 may reflect the variance in operating and/or ambient conditions to which the asset may be subjected. For illustration, the curves 100, 101, 102 may each be obtained by performing plural stochastic simulations using a Markov Chain model as explained with reference to Figure 3, but with different sets of transitions probabilities.

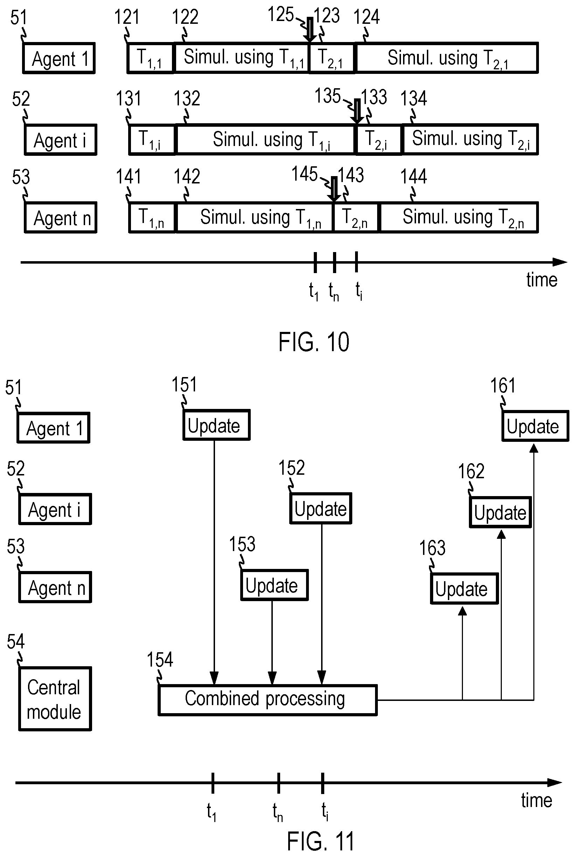

Figure 10 is a diagram illustrating operation of a system according to an embodiment as a function of time.

Different agents 51, 52, 53 are deployed. Each of the agents 51, 52, 53 is responsible for determining a prognosis for a future evolution of an asset health state. The assets are identical or similar.

All agents 51, 52, 53 may use the same set of states S1, ..., Sn for performing stochastic simulations. The states S1, ..., Sn may be ordered so that severity of degradation increases from one state to the next.

The agents 51, 52, 53 may receive initial transition probabilities 121, 131, 141. The initial transition probabilities 121, 131, 141 may be determined based on a user input or based on historical data, for example using Equation (4). The initial transition probabilities 121, 131, 141 may be the same. The initial transition probabilities 121, 131, 141 may be different, for example when the operating conditions and/or ambient conditions are different for the various assets for which the agents 51, 52, 53 perform a prognostic health analysis.

After initialization, a first agent 51 performs a stochastic simulation 122 using the initial transition probabilities, which may be arranged in a transition matrix $T_{1,1}$. The stochastic simulation 122 may be performed during a time interval, but may extend over a prognostic time horizon which may be longer than the time interval during which the transition matrix $T_{1,1}$ is used in the stochastic simulation.

First observation information 125 is received by the first agent 51 at a first update time $t_1$. The observation information 125 may include sensor data for the asset for which the first agent 51 performs the prognostic health analysis and/or transition probabilities and/or Bayesian transition probabilities determined by the other agents 52, 53 and/or the central module 54.

Receipt of the first observation information 125 triggers an update 123 of the transition matrix to $T_{2,1}$. Subsequently, the first agent 51 may re-run the stochastic simulation 124, at least for times later than the first update time $t_1$, using the updated transition matrix to $T_{2,1}$. An updated prognosis for the evolution of the asset health state is thereby obtained.

After initialization, an ith agent 52 performs a stochastic simulation 132 using the initial transition probabilities, which may be arranged in a transition matrix $T_{1,i}$. The stochastic simulation 132 may be performed during a time interval, but may extend over a prognostic time horizon which may be longer than the time interval during which the transition matrix $T_{1,i}$ is used in the stochastic simulation.

An ith set of observation information 135 is received by the ith agent 52 at an ith update time $t_i$. The observation information 135 may include sensor data for the asset for which the ith agent 52 performs the prognostic health analysis and/or transition probabilities and/or Bayesian transition probabilities determined by the other agents 51, 53 and/or the central module 54.

Receipt of the ith observation information 135 triggers an update 133 of the transition matrix to $T_{2,i}$. Subsequently, the ith agent 52 may re-run the stochastic simulation 134, at least for times later than the ith update time $t_i$, using the updated transition matrix to $T_{2,i}$. An updated prognosis for the evolution of the asset health state is thereby obtained.

After initialization, an $n^{th}$ agent 53 performs a stochastic simulation 142 using the initial transition probabilities, which may be arranged in a transition matrix $T_{1,n}$. The stochastic simulation 142 may be performed during a time interval, but may extend over a prognostic time horizon which may be longer than the time interval during which the transition matrix $T_{1,n}$ is used in the stochastic simulation.

An $n^{th}$ observation information 145 is received by the $n^{th}$ agent 53 at an $n^{th}$ update time $t_n$. The observation information 145 may include sensor data for the asset for which the $n^{th}$ agent 53 performs the prognostic health analysis and/or transition probabilities and/or Bayesian transition probabilities determined by the other agents 51, 52 and/or the central module 54.

Receipt of the $n^{th}$ observation information 145 triggers an update 143 of the transition matrix to $T_{2,n}$. Subsequently, the $n^{th}$ agent 53 may re-run the stochastic simulation 144, at least for times later than the $n^{th}$ update time $t_n$, using the updated transition matrix to $T_{2,n}$. An updated prognosis for the evolution of the asset health state is thereby obtained.

The various agents 51-53 may operate asynchronously. The updates 123, 133, 143 may be performed at different times, with the times being independent of each other. The updates 123, 133, 143 may be performed as event-triggered updated.

Figure 11 is a diagram illustrating operation of a system according to an embodiment as a function of time.

Different agents 51, 52, 53 are deployed. Each of the agents 51, 52, 53 is responsible for determining a prognosis for a future evolution of an asset health state. The assets are identical or similar.

All agents 51, 52, 53 may use the same set of states S1, ..., Sn for performing stochastic simulations. The states S1, ..., Sn may be ordered so that severity of degradation increases from one state to the next.

The agents 51, 52, 53 perform stochastic simulations (not shown in Figure 11) to determine a prognosis for a future evolution of an asset health states. Each one of the agents 51, 52, 53 may perform an update 151, 152, 153 to change the transition probabilities used by the agent in the stochastic simulation, as more reliable information on the degradation process becomes available during operation.

The central module 54 may receive information on the updates 151, 152, 153. For illustration, information on the updated transition probabilities computed by the agents 51, 52, 53 at the updates 151, 151, 152, 153 may be provided to the central module. Importance information, which may quantify the importance or reliability of an update (based, e.g., on the amount of sensor data used to generate the updated transition probabilities) may also be received by the central module 54.

The central module 54 may perform a combined processing, in order to combine the information from the updates 151, 152, 153 performed by different agents 51, 52, 53. The central module 54 may perform a probability fusion process in which the transition probabilities, as updated by some or all of the agents 51, 52, 53, are combined to compute modified transition probabilities.

The modified transition probabilities may subsequently be provided to the agents 51, 52, 53, triggering updates 161-163. The modified transition probabilities do not need to be provided synchronously to the different agents 51, 52, 53, but may be provided by the central module 54 in an asynchronous manner.

The results of the stochastic simulations may be used in various ways. A control and/or output operation may be automatically performed based on the results of the stochastic simulation, with the updated transition probabilities, or other prognostic asset health analysis.

For illustration, a RUL or PoF curve may be output. Information on a time-evolution of a confidence interval or variance may be concurrently output.

Alternatively or additionally, an operating point of the asset may be automatically adjusted by the local controller 21-23 associated with the asset.

Alternatively or additionally, inspection, maintenance, and/or replacement work may be automatically scheduled.

Alternatively or additionally, down-times for inspection, maintenance, and/or replacement work may be automatically scheduled.

Alternatively or additionally, alarms, warnings, or other output may be generated for outputting via an HMI depending on the RUL curve, PoF curve, or other prognostic asset health state evolution..

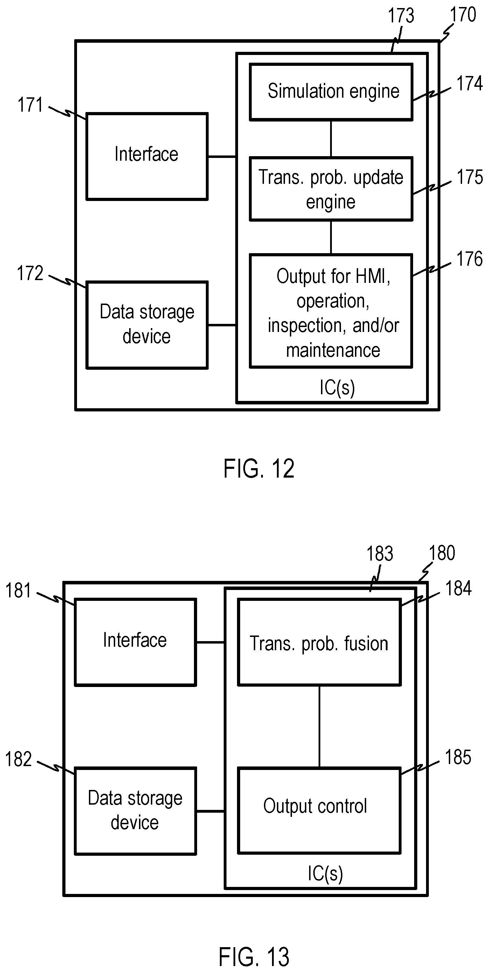

Figure 12 is a schematic diagram of a computing system 170. The computing system 170 may comprise one or several IC(s) 173. The IC(s) may include an application specific integrated circuits (ASIC), processor, controller, field programmable gate array (FGPA), or a combination of plural such integrated circuits.

The IC(s) 173 may reside in the central system 20, one of the local controllers 21-23, the server system 24, or may be distributed across these entities. The IC(s) 173 may be operative to execute one or several of the agents 51-53.

The IC(s) 173 may be operative to execute a stochastic simulation engine 174 to simulate the time-dependent evolution of a Markov Chain model. The stochastic simulation engine 174 may be operative to perform MCMC simulations.

Initial values for the transition probabilities for the Markov Chain model used by the stochastic simulation engine 174 may be received via an interface 171 (e.g., when the IC(s) 173 are resident in one of the local controllers 21-23 and the central system 20 computes the initial transition probabilities). The transition probabilities may be updated by the IC(s) 173 based on observation information received via the interface 171 during ongoing operation of the assets. The observation information may include any one or any combination of the following:

- Sensor data for the asset for which the agent executed by the IC(s) 173 determines a prognosis for a future evolution of the asset health state.
- Transition probabilities $p_{12}$, $p_{23}$, ... $p_{n-1,n}$, or Bayesian probability table data determined by another agent for another asset of the same or similar asset type.
- Transition probabilities or Bayesian probability table data determined by a central module 54.

The IC(s) 173 may be operative to execute a transition probability update engine 175. The transition probability update engine 175 may be invoked by receipt of observation information at the interface 171, which causes the transition probability update engine 175 to update the transition probabilities used locally for performing stochastic simulations.

The IC(s) 173 may be operative to execute an output engine 176. The output engine 176 may be operative to generate output to share information on the updates performed by the transition probability update engine 175.

The output engine 176 may also generate output data or output signals for controlling an HMI and/or implementing a control operation for the asset or the system in which the asset is being used. For illustration, the output engine 176 may be operative to generate and output data to an HMI such that a RUL or PoF curve is output. The output engine 176 may be operative to generate and output data to the HMI such that information on a time-evolution of a confidence interval or variance may be concurrently output.

Alternatively or additionally, the output engine 176 may be operative to automatically adjust an operating point of the asset in response to the stochastic simulation, with transition probabilities as updated by the transition probability engine 175.

Alternatively or additionally, the output engine 176 may be operative to automatically generate and output information on inspection, maintenance, and/or replacement work.

Alternatively or additionally, the output engine 176 may be operative to automatically generate and output information on down-times for inspection, maintenance, and/or replacement work may be automatically scheduled.

Alternatively or additionally, the output engine 176 may be operative to automatically generate and output alarms, warnings, or other output may be generated for outputting via an HMI depending on the RUL or PoF curve or other prognostic asset health state evolution.

Figure 13 is a schematic diagram of a computing system 180. The computing system 180 may comprise one or several IC(s) 183. The IC(s) may include an application specific integrated circuits (ASIC), processor, controller, field programmable gate array (FGPA), or a combination of plural such integrated circuits.

The IC(s) 183 may reside in the central system 20 or the server system 24 or may be distributed across these entities. The IC(s) 183 may be operative to execute the central module 54.

The IC(s) 183 may be operative to execute a transition probability fusion engine 184. The transition probability fusion engine 184 may combine transition probabilities as updated by several agents 51, 52, 53, optionally using importance information quantifying the relative information of the updates, to compute modified transition probabilities.

The transition probabilities as updated by several agents 51, 52, 53 may be received via an interface 181. Additional data, such as historical data used to determine the initial transition probabilities used for initializing the agents 51, 52, 53, may be stored in a data storage device 182 and may be used for determining the modified transition probabilities.

The IC(s) 183 may be operative to execute an output control 185 that output the modified transition probabilities, obtained by fusing the updates from several agents, to the agents. The output control 185 may be operative to output the modified transition probabilities to different agents 51, 52, 53 at different times. The output control 185 may be operative to output the modified transition probabilities to different agents 51, 52, 53 in an event-triggered manner, for example in response to establishment of a communication channel with the different agents 51, 52, 53.

Various effects and advantages are associated with the invention. The stochastic simulation executed by an agent to obtain a prognosis for the future evolution of an asset health state may be updated using dynamically arriving data from comparable industrial or power system assets. The relevant information exchange requires only a small number of parameters to be exchanged between agents and/or between a central module and the agents. Different agents can operate asynchronously.

The methods and systems according to the invention may be used in association with electric power system assets, such as assets of power generation, distribution and/or transmission systems, or assets of industrial systems, without being limited thereto.

While the invention has been described in detail in the drawings and foregoing description, such description is to be considered illustrative or exemplary and not restrictive. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

**Claims**

1. A method of operating and/or maintaining an asset, comprising:

    performing a prognostic health analysis for the asset, wherein the asset (11, 16) is included in a set of plural assets (11-13; 16-18) that are associated with a set of agents (51-53), each of the agents (51-53) performing a prognostic health analysis for an associated asset of the set of assets (11-13; 16-18), wherein performing the prognostic health analysis comprises the following steps:

    determining, by an agent (51) of the set of agents (51-53), a prognosis for a future evolution of an asset health state of an asset (11, 16) of the set of assets (11-13; 16-18) by performing a stochastic simulation, the stochastic simulation being performed using transition probabilities for transitions between states of a discrete state model (41-44);
    receiving, by the agent (51), observation information (61; 67) that is a function of an observed degradation of at least one asset of the set of assets (11-13; 16-18);
    updating, by the agent (51), the prognosis (80), including updating the transition probabilities based on the received observation information; and
    generating output (80; 100) based on a result of the stochastic simulation; and

    automatically taking, by a computing system, a control action based on the prognostic asset health analysis.

2. The method of claim 1, wherein the agent (51) is operative to update the transition probabilities at a time that is independent of a time at which other agents (52, 53) update transition probabilities used by the other agents (52, 53) to perform stochastic simulations.

3. The method of any one of the preceding claims, wherein the agent (51) shares information on the updated transition probabilities with other agents (52, 53) of the set of agents (51-53) in an asynchronous manner.

4. The method of any one of the preceding claims, wherein the observation information (61) is a function of sensor measurements obtained for the asset (11; 16).

5. The method of claim 4, further comprising outputting, by the agent (51), the observation information or data (64) derived therefrom to at least one other agent of the set of agents (51-53) and/or to a central module (54).

6. The method of any one of the preceding claims, wherein the observation information (67) is a function of sensor measurements obtained for at least one other asset (12, 13; 17, 18) different from the asset (11; 16).

7. The method of any one of the preceding claims, wherein the observation information comprises modified transition probabilities and/or modified Bayesian conditional probabilities.

8. The method of any one of the preceding claims, wherein the discrete state space (41-44) has n states, with n being an integer greater than two, and wherein a transition matrix used in the stochastic simulation has only n-1 non-zero off-diagonal matrix elements, optionally wherein the observation information consists of n-1 transition probabilities.

9. The method of any one of the preceding claims, wherein the discrete state space comprises:

    at least one state (41) in which operation of the asset (11, 16) is not adversely affected by a failure;
    at least one state (42, 43) in which operation of the asset (11, 16) is adversely affected by a failure, but the asset (11, 16) continues to operate;
    a state (44) in which the asset (11, 16) is inoperative due to a failure.

10. The method of any one of the preceding claims, wherein the stochastic simulation is a Markov Chain Montel Carlo, MCMC, simulation.

11. The method of any one of the preceding claims, wherein each of the set of agents (51-53) performs a stochastic simulation to determine a prognosis for a future evolution of an asset health state of the asset associated with the respective agent, and wherein the agents independently update the transition probabilities used in the stochastic simulations.

12. The method of any one of the preceding claims, wherein performing the prognostic health analysis further comprises:

receiving, by a central module (54), information (64-66) on the transition probabilities updated by the agent (51-53);
determining, by the central module (54), modified transition probabilities; and
outputting, by the central module (54), the modified transition probabilities to the set of agents (51-53);

optionally wherein determining the modified transition probabilities comprises weighting received information with a weighting factor, further optionally wherein the weighting factor is dependent on a reliability associated with the updated transition probabilities determined by the agent.

13. A computing system operative to perform a prognostic health analysis for an asset (11, 16) included in a set of assets (11-13; 16-18), the computing system comprising at least one integrated circuit (103) operative to execute an agent (51) to:

determine a prognosis for a future evolution of an asset health state of the asset (11, 16) by performing a stochastic simulation, the stochastic simulation being performed using transition probabilities for transitions between states of a discrete state model;
receive observation information from another agent in the set of assets (11-13; 16-18) and/or from a central module via a communication channel, the observation information being based on an observed degradation of at least one asset (11, 16) of the set of assets (11-13; 16-18);
update the prognosis (80), including updating the transition probabilities based on the received observation information from another agent and/or from the central module; and
generate output based on a result of the stochastic simulation,
wherein the computing system (170) is operative to automatically take a control action for operating and/or maintaining the asset based on the prognostic asset health analysis.

14. An industrial or electric power system (10; 15), comprising:

a set of assets (11-13; 16-18) and
the computing system (170) of claim 13 to perform a prognostic asset health analysis for an asset (11, 16) of the set of assets (11-13; 16-18).

15. The industrial or electric power system (10; 15) of claim 14, wherein the computing system (170) is a decentralized control system (20-24) of the industrial or electric power system for controlling the asset.

## Patentansprüche

1. Ein Verfahren zum Betreiben und/oder Verwalten eines Assets, umfassend:
Durchführen einer prognostischen Gesundheitsanalyse für das Asset, wobei das Asset (11, 16) Teil eines Satzes von mehreren Assets (11-13; 16-18) ist, der mit einem Satz von Agenten (51-53) assoziiert ist, wobei jeder der Agenten (51-53) eine prognostische Gesundheitsanalyse für ein assoziiertes Asset des Satzes von Assets (11-13; 16-18) durchführt, wobei ein Durchführen der prognostischen Gesundheitsanalyse die folgenden Schritte umfasst:

Bestimmen einer Prognose für eine zukünftige Entwicklung eines Asset-Gesundheitszustands eines Assets (11, 16) des Satzes von Assets (11-13; 16-18) durch einen Agenten (51) des Satzes von Agenten (51-53) durch Durchführen einer stochastischen Simulation, wobei die stochastische Simulation unter Verwendung von Übergangswahrscheinlichkeiten für Übergänge zwischen Zuständen eines diskreten Zustandsmodells (41-44) durchgeführt wird;
Empfangen von Beobachtungsinformationen (61; 67) durch den Agenten (51), die eine Funktion einer beobachteten Verschlechterung mindestens eines Assets des Satzes von Assets (11-13; 16-18) sind;
Aktualisieren der Prognose (80) durch den Agenten (51), umfassend ein Aktualisieren der Übergangswahrscheinlichkeiten basierend auf den empfangenen Beobachtungsinformationen; und

Erzeugen einer Ausgabe (80; 100) basierend auf einem Ergebnis der stochastischen Simulation; und

automatisches Ergreifen einer Kontrollmaßnahme durch ein Computersystem basierend auf der prognostischen Asset-Gesundheitsanalyse.

2. Das Verfahren nach Anspruch 1, wobei der Agent (51) dazu ausgelegt ist, die Übergangswahrscheinlichkeiten zu einem Zeitpunkt zu aktualisieren, der unabhängig von einem Zeitpunkt ist, zu dem andere Agenten (52, 53) Übergangswahrscheinlichkeiten aktualisieren, die von den anderen Agenten (52, 53) verwendet werden, um stochastische Simulationen durchzuführen.

3. Das Verfahren nach einem der vorhergehenden Ansprüche, wobei der Agent (51) Informationen über die aktualisierten Übergangswahrscheinlichkeiten mit anderen Agenten (52, 53) des Satzes von Agenten (51-53) auf asynchrone Weise teilt.

4. Das Verfahren nach einem der vorhergehenden Ansprüche, wobei die Beobachtungsinformationen (61) eine Funktion von Sensormessungen sind, die für das Asset (11; 16) erhalten werden.

5. Das Verfahren nach Anspruch 4, ferner umfassend Ausgeben der Beobachtungsinformationen oder davon abgeleiteten Daten (64) durch den Agenten (51) an mindestens einen anderen Agenten des Satzes von Agenten (51-53) und/oder an ein zentrales Modul (54).

6. Das Verfahren nach einem der vorhergehenden Ansprüche, wobei die Beobachtungsinformationen (67) eine Funktion von Sensormessungen sind, die für mindestens ein anderes Asset (12, 13; 17, 18), das sich von dem Asset (11; 16) unterscheidet, erhalten werden.

7. Das Verfahren nach einem der vorhergehenden Ansprüche, wobei die Beobachtungsinformationen modifizierte Übergangswahrscheinlichkeiten und/oder modifizierte bedingte Bayes-Wahrscheinlichkeiten umfassen.

8. Das Verfahren nach einem der vorhergehenden Ansprüche, wobei der diskrete Zustandsraum (41-44) n Zustände aufweist, wobei n eine ganze Zahl größer als zwei ist, und wobei eine Übergangsmatrix, die in der stochastischen Simulation verwendet wird, nur n - 1 außerdiagonale Matrixelemente ungleich Null aufweist, wobei optional die Beobachtungsinformationen aus n - 1 Übergangswahrscheinlichkeiten bestehen.

9. Das Verfahren nach einem der vorhergehenden Ansprüche, wobei der diskrete Zustandsraum Folgendes umfasst:

mindestens einen Zustand (41), in dem ein Betrieb des Assets (11, 16) nicht durch einen Ausfall beeinträchtigt wird;

mindestens einen Zustand (42, 43), in dem ein Betrieb des Assets (11, 16) durch einen Ausfall beeinträchtigt wird, das Asset (11, 16) jedoch weiterarbeitet;

einen Zustand (44), in dem das Asset (11, 16) aufgrund eines Ausfalls betriebsunfähig ist.

10. Das Verfahren nach einem der vorhergehenden Ansprüche, wobei die stochastische Simulation eine Markov Chain Monte Carlo-Simulation, MCMC-Simulation, ist.

11. Das Verfahren nach einem der vorhergehenden Ansprüche, wobei jeder des Satzes von Agenten (51-53) eine stochastische Simulation durchführt, um eine Prognose für eine zukünftige Entwicklung eines Asset-Gesundheitszustands des mit dem jeweiligen Agenten assoziierten Assets zu bestimmen, und wobei die Agenten die Übergangswahrscheinlichkeiten, die in den stochastischen Simulationen verwendet werden, unabhängig aktualisieren.

12. Das Verfahren nach einem der vorhergehenden Ansprüche, wobei ein Durchführen der prognostischen Gesundheitsanalyse ferner Folgendes umfasst:

Empfangen von Informationen (64-66) über die Übergangswahrscheinlichkeiten, die durch den Agenten (51-53) aktualisiert werden, durch ein zentrales Modul (54);

Bestimmen modifizierter Übergangswahrscheinlichkeiten durch das zentrale Modul (54); und

Ausgeben der modifizierten Übergangswahrscheinlichkeiten durch das zentrale Modul (54) an den Satz von Agenten (51-53);

wobei optional ein Bestimmen der modifizierten Übergangswahrscheinlichkeiten ein Gewichten empfangener Informationen mit einem Gewichtungsfaktor umfasst, wobei ferner optional der Gewichtungsfaktor von einer Zuverlässigkeit abhängt, die mit den aktualisierten Übergangswahrscheinlichkeiten assoziiert ist, die durch den Agenten bestimmt werden.

**13.** Ein Computersystem, das dazu ausgelegt ist, eine prognostische Gesundheitsanalyse für ein Asset (11, 16) durchzuführen, das Teil eines Satzes von Assets (11-13; 16-18) ist, wobei das Computersystem mindestens eine integrierte Schaltung (103) aufweist, die dazu ausgelegt ist, einen Agenten (51) für Folgendes auszuführen:

Bestimmen einer Prognose für eine zukünftige Entwicklung eines Asset-Gesundheitszustands des Assets (11, 16) durch Durchführen einer stochastischen Simulation, wobei die stochastische Simulation unter Verwendung von Übergangswahrscheinlichkeiten für Übergänge zwischen Zuständen eines diskreten Zustandsmodells durchgeführt wird;
Empfangen von Beobachtungsinformationen von einem anderen Agenten in dem Satz von Assets (11-13; 16-18) und/oder von einem zentralen Modul über einen Kommunikationskanal, wobei die Beobachtungsinformationen auf einer beobachteten Verschlechterung mindestens eines Assets (11, 16) des Satzes von Assets (11-13; 16-18) basieren;
Aktualisieren der Prognose (80), umfassend ein Aktualisieren der Übergangswahrscheinlichkeiten basierend auf den empfangenen Beobachtungsinformationen von einem anderen Agenten und/oder von dem zentralen Modul; und
Erzeugen einer Ausgabe basierend auf einem Ergebnis der stochastischen Simulation,
wobei das Computersystem (170) dazu ausgelegt ist, basierend auf der prognostischen Asset-Gesundheitsanalyse automatisch eine Kontrollmaßnahme zum Betreiben und/oder Verwalten des Assets zu ergreifen.

**14.** Ein industrielles oder elektrisches Energiesystem (10; 15), aufweisend:

einen Satz von Assets (11-13; 16-18) und
das Computersystem (170) nach Anspruch 13 zum Durchführen einer prognostischen Asset-Gesundheitsanalyse für ein Asset (11, 16) des Satzes von Assets (11-13; 16-18).

**15.** Das industrielle oder elektrische Energiesystem (10; 15) nach Anspruch 14, wobei das Computersystem (170) ein dezentralisiertes Steuersystem (20-24) des industriellen oder elektrischen Energiesystems zum Steuern des Assets ist.

**Revendications**

**1.** Procédé d'exploitation et/ou de maintenance d'un actif, comprenant les étapes suivantes :
réaliser une analyse pronostique de l'état de l'actif, où l'actif (11, 16) est inclus dans un ensemble de plusieurs actifs (11-13 ; 16-18) qui sont associés à un ensemble d'agents (51-53), chacun des agents (51-53) réalisant une analyse pronostique de l'état d'un actif associé de l'ensemble d'actifs (11-13 ; 16-18), où la réalisation de l'analyse pronostique de l'état comprend les étapes suivantes :

déterminer, par un agent (51) de l'ensemble d'agents (51-53), un pronostic de l'évolution future de l'état d'un actif (11, 16) de l'ensemble d'actifs (11-13 ; 16-18) en réalisant une simulation stochastique, la simulation stochastique étant effectuée à l'aide de probabilités de transition pour des transitions entre les états d'un modèle d'états discrets (41-44) ;
recevoir, par l'agent (51), des informations d'observation (61 ; 67) qui sont fonction d'une dégradation observée d'au moins un actif de l'ensemble d'actifs (11-13 ; 16-18) ;
mettre à jour, par l'agent (51), le pronostic (80), y compris mettre à jour les probabilités de transition sur la base des informations d'observation reçues ; et
générer une sortie (80 ; 100) sur la base d'un résultat de la simulation stochastique ; et
réaliser automatiquement, par un système informatique, une action de contrôle sur la base de l'analyse pronostique de l'état de l'actif.

**2.** Procédé selon la revendication 1, dans lequel l'agent (51) est opérationnel pour mettre à jour les probabilités de transition à un moment qui est indépendant du moment auquel d'autres agents (52, 53) mettent à jour les probabilités de transition utilisées par les autres agents (52, 53) pour effectuer des simulations stochastiques.

**3.** Procédé selon l'une quelconque des revendications précédentes, dans lequel l'agent (51) partage des informations sur les probabilités de transition mises à jour avec d'autres agents (52, 53) de l'ensemble d'agents (51-53) de manière asynchrone.

**4.** Procédé selon l'une quelconque des revendications précédentes, dans lequel les informations d'observation (61) sont une fonction de mesures de capteurs obtenues pour l'actif (11 ; 16).

**5.** Procédé selon la revendication 4, comprenant en outre la sortie, par l'agent (51), des informations d'observation ou des données (64) dérivées de celles-ci vers au moins un autre agent de l'ensemble d'agents (51-53) et/ou vers un module central (54).

**6.** Procédé selon l'une quelconque des revendications précédentes, dans lequel les informations d'observation (67) sont une fonction de mesures de capteurs obtenues pour au moins un autre actif (12, 13 ; 17, 18) différent de l'actif (11 ; 16).

**7.** Procédé selon l'une quelconque des revendications précédentes, dans lequel les informations d'observation comprennent des probabilités de transition modifiées et/ou des probabilités conditionnelles bayésiennes modifiées.

**8.** Procédé selon l'une quelconque des revendications précédentes, dans lequel l'espace d'états discrets (41-44) comporte n états, n étant un nombre entier supérieur à deux, et dans lequel une matrice de transition utilisée dans la simulation stochastique ne comporte que n-1 éléments de matrice non nuls hors diagonale, éventuellement dans lequel les informations d'observation sont constituées de n-1 probabilités de transition.

**9.** Procédé selon l'une quelconque des revendications précédentes, dans lequel l'espace d'états discrets comprend :

au moins un état (41) dans lequel le fonctionnement de l'actif (11, 16) n'est pas affecté de manière défavorable par une défaillance ;
au moins un état (42, 43) dans lequel le fonctionnement de l'actif (11, 16) est affecté de manière défavorable par une défaillance, mais l'actif (11, 16) continue de fonctionner ;
un état (44) dans lequel l'actif (11, 16) est inopérant en raison d'une défaillance.

**10.** Procédé selon l'une quelconque des revendications précédentes, dans lequel la simulation stochastique est une simulation de Monte Carlo par chaînes de Markov, MCMC.

**11.** Procédé selon l'une quelconque des revendications précédentes, dans lequel chacun de l'ensemble d'agents (51-53) effectue une simulation stochastique pour déterminer un pronostic pour une évolution future d'un état d'un actif associé à l'agent respectif, et dans lequel les agents mettent à jour indépendamment les probabilités de transition utilisées dans les simulations stochastiques.

**12.** Procédé selon l'une quelconque des revendications précédentes, dans lequel l'exécution de l'analyse d'état pronostique comprend en outre les étapes suivantes :

recevoir, par un module central (54), des informations (64-66) sur les probabilités de transition mises à jour par l'agent (51-53) ;
déterminer, par le module central (54), des probabilités de transition modifiées ; et
délivrer en sortie, par le module central (54), les probabilités de transition modifiées vers l'ensemble d'agents (51-53) ;
facultativement, où la détermination des probabilités de transition modifiées comprend de pondérer les informations reçues avec un facteur de pondération, en outre facultativement, le facteur de pondération dépendant d'une fiabilité associée aux probabilités de transition mises à jour déterminées par l'agent.

**13.** Système informatique fonctionnant pour effectuer une analyse pronostique de l'état d'un actif (11, 16) inclus dans un ensemble d'actifs (11-13 ; 16-18), le système informatique comprenant au moins un circuit intégré (103) fonctionnant pour exécuter un agent (51) afin de :

déterminer un pronostic pour une évolution future d'un état d'un actif (11, 16) en effectuant une simulation stochastique, la simulation stochastique étant effectuée en utilisant des probabilités de transition entre des états d'un modèle d'états discrets ;

recevoir des informations d'observation provenant d'un autre agent dans l'ensemble d'actifs (11-13 ; 16-18) et/ou d'un module central par l'intermédiaire d'un canal de communication, les informations d'observation étant basées sur une dégradation observée d'au moins un actif (11, 16) de l'ensemble d'actifs (11-13 ; 16-18) ;

mettre à jour le pronostic (80), y compris mettre à jour les probabilités de transition sur la base des informations d'observation reçues d'un autre agent et/ou du module central ; et

générer une sortie sur la base d'un résultat de la simulation stochastique,

où le système informatique (170) est opérationnel pour réaliser automatiquement une action de contrôle pour faire fonctionner et/ou entretenir l'actif sur la base de l'analyse pronostique de l'état de l'actif.

14. Système industriel ou d'alimentation électrique (10 ; 15), comprenant :

un ensemble d'actifs (11-13 ; 16-18) et

le système informatique (170) de la revendication 13 pour réaliser une analyse pronostique de l'état d'un actif (11, 16) de l'ensemble d'actifs (11-13 ; 16-18).

15. Système industriel ou d'alimentation électrique (10 ; 15) selon la revendication 14, dans lequel le système informatique (170) est un système de contrôle décentralisé (20-24) du système industriel ou d'alimentation électrique pour contrôler l'actif.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7788205 B2

### Non-patent literature cited in the description

- **SANG-RI YI et al.** Particle Filter Based Monitoring and Prediction of Spatiotemporal Corrosion Using Successive Measurements of Structural Responses. *SENSORS*, 13 November 2018, vol. 18 (11), 3909
- **X. SI et al.** A General Stochastic Degradation Modeling Approach for Prognostics of Degrading Systems With Surviving and Uncertain Measurements. *IEEE TRANSACTIONS ON RELIABILITY, IEEE SERVICE CENTER*, 01 September 2019, vol. 68 (3), 1080-1100
- **J.Z. SIKORSKA et al.** , "Prognostic modelling options for remaining useful life estimation by industry. *MECHANICAL SYSTEMS AND SIGNAL PROCESSING*, 01 July 2011, vol. 25 (5), 1803-1836